(19) Europäisches Patentamt
European Patent Office
Office européen des brevets

(11) **EP 4 624 430 A1**

(12) **EUROPEAN PATENT APPLICATION**
published in accordance with Art. 153(4) EPC

(43) Date of publication:
**01.10.2025 Bulletin 2025/40**

(21) Application number: **23894449.0**

(22) Date of filing: **10.11.2023**

(51) International Patent Classification (IPC):
***C03B 5/237*** *(2006.01)*

(52) Cooperative Patent Classification (CPC):
**C03B 5/237; Y02P 40/50**

(86) International application number:
**PCT/JP2023/040614**

(87) International publication number:
**WO 2024/111440 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 JP 2022188269**

(71) Applicant: **AGC INC.**
**Chiyoda-ku,**
**Tokyo 1008405 (JP)**

(72) Inventors:
• **MAEHARA, Terutaka**
  **Tokyo 100-8405 (JP)**
• **TANAKA, Toshiyuki**
  **Tokyo 100-8405 (JP)**
• **OKAMOTO, Mio**
  **Tokyo 100-8405 (JP)**
• **SUZUKI, Yudai**
  **Tokyo 100-8405 (JP)**

(74) Representative: **Müller-Boré & Partner**
**Patentanwälte PartG mbB**
**Friedenheimer Brücke 21**
**80639 München (DE)**

(54) **APPARATUS FOR PRODUCING GLASS AND METHOD FOR PRODUCING GLASS**

(57) An apparatus for producing glass includes: a recuperator heating a heat transfer medium through heat exchange with a combustion gas emitted from a glass melting furnace; a reactor causing a reverse shift reaction to progress by heating $CO_2$ gas and $H_2$ gas through heat exchange with the heat transfer medium heated by the recuperator and producing at least CO gas from the $CO_2$ gas and the $H_2$ gas; and a burner forming a flame inside the glass melting furnace by burning a flammable gas containing the CO gas produced by the reactor and a oxidizing gas.

FIG. 1

EP 4 624 430 A1

**Description**

TECHNICAL FIELD

The present disclosure relates to an apparatus for producing glass and a method for producing glass.

BACKGROUND ART

An apparatus for producing glass includes a burner that forms a flame inside a glass melting furnace. The burner forms a flame by burning a flammable gas and a oxidizing gas. The flammable gas, for example, is natural gas. Natural gas contains $CH_4$ gas as its main component. The oxidizing gas, for example, is pure oxygen gas or air. The flame heats a glass raw material and molten glass that is formed by melting the glass raw material.

As described above, there are cases in which air is used as a oxidizing gas. In such cases, since $N_2$ gas accounting for most of air does not contribute to combustion, a large amount of air is used, and a large amount of a combustion gas is emitted from the glass melting furnace. The combustion gas is a gas remaining after a combustion reaction of a flammable gas and a oxidizing gas (including $N_2$ gas that does not contribute to the combustion reaction). In order to recover the heat of the combustion gas emitted in a large amount, a first regenerator and a second regenerator may be installed near the glass melting furnace.

The first regenerator and the second regenerator are used in combination with a first burner and a second burner. The apparatus for producing glass repeatedly performs formation of a flame inside the glass melting furnace using the first burner and formation of a flame inside the glass melting furnace using the second burner in an alternating manner.

The first regenerator recovers heat from the combustion gas emitted from the glass melting furnace while the second burner forms a flame inside the glass melting furnace. The first regenerator heats at least one of the flammable gas and the oxidizing gas by releasing heat recovered in advance while the first burner forms a flame inside the glass melting furnace. The first burner forms a flame inside the glass melting furnace by burning the flammable gas and the oxidizing gas at least one of which has been heated in the first regenerator.

Similarly, the second regenerator recovers heat from the combustion gas emitted from the glass melting furnace while the first burner forms a flame inside the glass melting furnace. The second regenerator heats at least one of the flammable gas and the oxidizing gas by releasing heat recovered in advance while the second burner forms a flame inside the glass melting furnace. The second burner forms a flame inside the glass melting furnace by burning the flammable gas and the oxidizing gas at least one of which has been heated in the second regenerator.

The first regenerator of Patent Document 1 dissipates heat while the first burner forms a flame inside the glass melting furnace, thereby causing an endothermic reaction to progress. As an example of the endothermic reaction, a reaction to produce CO gas and $H_2$ gas from $CH_4$ gas, $H_2O$ gas, and $CO_2$ gas has been disclosed. The CO gas and the $H_2$ gas produced in the first regenerator are supplied to the first burner as a flammable gas.

As described above, pure oxygen gas may be used as a oxidizing gas. In this case, the oxidizing gas does not contain $N_2$ gas. Thus, there is a small emisson amount of the combustion gas, and no regenerator is necessary, whereby the flexibility in the design of the glass melting furnace is improved. In addition, $N_2$ gas not contributing to combustion does not need to be heated unnecessarily, and glass can be efficiently heated using the heat of combustion. Furthermore, the formation of $NO_X$ gas can be suppressed.

A recuperator may be used instead of a regenerator as a means of recovering heat from the combustion gas emitted from the glass melting furnace.

A recuperator of Patent Document 2 heats air through heat exchange with a combustion gas. The air transports heat from a recuperator to a reactor. The reactor heats natural gas through heat exchange with air heated by the recuperator and causes an endothermic reaction that produces $CH_4$ gas from $C_mH_n$ gas (here, m and n are integers of 2 or more) contained in the natural gas to progress.

Patent Document 3 discloses that, when the concentration of $H_2O$ gas in the furnace atmosphere of a glass melting furnace is too high, the moisture concentration contained in molten glass becomes too high, and the quality of the glass is degraded (for example, defects are formed on the bottom surface of float glass).

Citation List

Patent Document

Patent Document 1: Japanese Patent No. 3705713
Patent Document 2: Japanese Patent No. 6980795

Patent Document 3: Japanese Patent No. 6144622

SUMMARY OF INVENTION

Technical Problem

Generally, natural gas is used as a flammable gas to be burned by a burner. Natural gas contains $CH_4$ gas as its main component. When $CH_4$ gas is burned, $CO_2$ gas is produced and $CO_2$ gas is emitted. Thus, in order to reduce the amount of production of $CO_2$ gas and furthermore the amount of emission of $CO_2$ gas, $H_2$ gas may be considered to be used instead of $CH_4$ gas.

In Patent Documents 1 and 2, although a means for efficiently recovering heat of a combustion gas in a case in which $CH_4$ gas is used as a flammable gas has been reviewed, a means for efficiently recovering heat of a combustion gas in a case in which $H_2$ gas is used as a flammable gas has not been reviewed.

An aspect of the present disclosure provides a technology for reducing the specific energy consumption of molten glass in a case in which $H_2$ gas is used as a flammable gas.

Solution to Problem

An apparatus for producing glass according to one aspect of the present disclosure includes: a recuperator heating a heat transfer medium through heat exchange with a combustion gas emitted from a glass melting furnace; a reactor causing a reverse shift reaction to progress by heating $CO_2$ gas and $H_2$ gas through heat exchange with the heat transfer medium heated by the recuperator and producing at least CO gas from the $CO_2$ gas and the $H_2$ gas; and a burner forming a flame inside the glass melting furnace by burning a flammable gas containing the CO gas produced by the reactor and a oxidizing gas.

Advantageous Effects of Invention

According to one aspect of the present disclosure, in a case in which $H_2$ gas is used as a flammable gas, a reverse shift reaction of producing at least CO gas from the $H_2$ gas and $CO_2$ gas is caused to progress. The reverse shift reaction is an endothermic reaction, and thus heat of a combustion gas can be efficiently recovered. In addition, the product of an endothermic reaction (CO gas) potentially contains a larger heat content than a reactant of the endothermic reaction (the $H_2$ gas). Therefore, by burning CO gas, a heat of combustion per mole can be improved compared with in a case in which $H_2$ gas is burned. As a result, the specific energy consumption of molten glass can be reduced.

BRIEF DESCRIPTION OF DRAWINGS

[FIG. 1] A diagram illustrating an apparatus for producing glass according to an embodiment.

[FIG. 2] A diagram illustrating Example 1 to Example 40 of combinations of a flammable gas, a oxidizing gas, presence/absence of transformation of a flammable gas, a molar ratio x, concentration of $H_2O$ gas, a reaction temperature, a reaction rate y, and a rate of increase in heat of combustion due to transformation.

[FIG. 3] A diagram illustrating a first example of an apparatus for producing glass including a recuperator and a reactor.

[FIG. 4] A diagram illustrating a second example of an apparatus for producing glass including a recuperator and a reactor.

[FIG. 5] A diagram illustrating a third example of an apparatus for producing glass including a recuperator and a reactor.

[FIG. 6] A diagram illustrating the first example of the apparatus for producing glass including a first regenerator and a second regenerator.

DESCRIPTION OF EMBODIMENTS

Hereinafter, an embodiment of the present disclosure will be described with reference to the drawings. The same reference signs will be assigned to the same components or components corresponding to each other in the drawings, and description thereof may be omitted. In the specification, "-" representing a numerical range means inclusion of numerical values using numerical values written before and after it respectively as a lower limit value and an upper limit value.

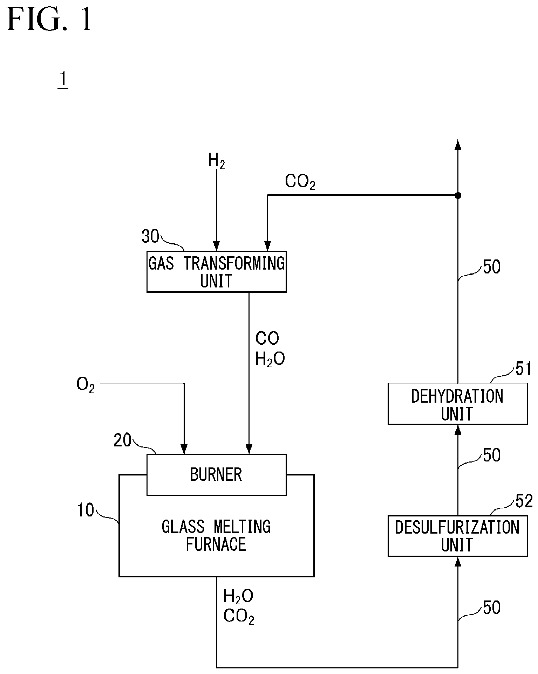

An apparatus 1 for producing glass according to an embodiment will be described with reference to FIG. 1. The apparatus 1 for producing glass includes a glass melting furnace 10. The glass melting furnace 10 houses a glass raw material and molten glass formed by melting the glass raw material. The molten glass is extracted from the glass melting furnace 10 and, thereafter, is formed into a desired shape and slowly cooled. In accordance with this, a glass product is acquired.

The glass raw material is prepared by mixing a plurality of types of materials. The glass raw material may contain a fining agent. The glass raw material may contain glass cullet for recycling glass. The glass raw material may be a powder material or a granulated material acquired by granulating a powder material. The glass raw material is determined in accordance with the composition of a glass product.

The glass melting furnace 10 is configured using refractories. The refractories include, for example, zirconia fused cast refractories, alumina fused cast refractories,, alumina-zirconia fused cast refractories, AZS (Al-Zr-Si) fused cast refractories, densfired refractories, or the like. The glass melting furnace 10 may be configured using a plurality of types of refractories.

The apparatus 1 for producing glass includes a burner 20. The burner 20 forms a flame inside the glass melting furnace 10. The flame heats a glass raw material and molten glass. The glass raw material is fed in from above relative to the surface level of the molten glass to form a layer on at least a part of the surface level. The glass raw material is gradually fused into the molten glass. Although only one burner 20 is illustrated in FIG. 1, commonly, a plurality of burners 20 are used.

The apparatus 1 for producing glass may use a plurality of electrodes together, which are not illustrated in the drawing, as a heat source. The plurality of electrodes apply an AC voltage to the molten glass, thereby energizing and heating the molten glass. In this case, the molten glass produces heat. The apparatus 1 for producing glass may additionally use an electric heater, which is not illustrated in the drawing, as a heat source. The electric heater produces heat itself. The apparatus 1 for producing glass includes at least the burner 20 as a heat source.

The burner 20 forms a flame by burning a flammable gas and a oxidizing gas. In this embodiment, $H_2$ gas (in more detail, a gas acquired by transforming to $H_2$ gas as will be described below) is used as at least a part of the flammable gas. By using the $H_2$ gas, compared to a case in which $CH_4$ gas is used, the amount of production of $CO_2$ gas and, furthermore, the amount of emission of $CO_2$ gas can be reduced.

$H_2$ gas may be used as at least a part of the flammable gas, and natural gas may be used in combination therewith. Since natural gas contains $CH_4$ gas as its main component, the less natural gas is used, the better. From the point of view of reducing the amount of production of $CO_2$ gas, the amount of use of natural gas is preferably between 0 volume% to 50 volume%, more preferably between 0 volume% to 25 volume%, and even more preferably 0 volume%.

When $H_2$ gas is burned instead of $CH_4$ gas, $H_2O$ gas is produced through a reaction of $H_2$ gas and $O_2$ gas, and no $CO_2$ gas is produced. However, the concentration of the $H_2O$ gas in the furnace atmosphere rises by an amount corresponding to no production of $CO_2$ gas. This is significant in a case in which pure oxygen gas is used as a oxidizing gas. In a case in which pure oxygen gas is used, the concentration of $H_2O$ gas in the furnace atmosphere theoretically becomes 100 volume%.

The glass raw material may emission a gas at the time of being melted. For example, in a case in which the glass raw material contains a carbonate such as calcium carbonate or magnesium carbonate, the glass raw material emits $CO_2$ gas at the time of melting. Thus, the concentration of $H_2O$ gas in the furnace atmosphere actually becomes less than 100 volume%.

In a case in which the concentration of $H_2O$ gas in the furnace atmosphere is too high, NaOH gas, which originates from Na contained in the molten glass, is readily produced, and a furnace material such as a brick readily corrodes. Alternatively, in a case in which the concentration of $H_2O$ gas in the furnace atmosphere is too high, the concentration of moisture contained in the molten glass becomes too high, and the quality of glass may be degraded.

When air is used instead of pure oxygen gas as a oxidizing gas, the concentration of $H_2O$ gas in the furnace atmosphere can be reduced. In this case, since $N_2$ gas, which accounts for most of air, does not contribute to combustion, a large amount of air is used, and a large amount of a combustion gas is emitted from the glass melting furnace. The combustion gas is a gas remaining after a combustion reaction between a flammable gas and a oxidizing gas (also including $N_2$ gas that does not contribute to combustion). In order to recover the heat of a combustion gas emitted in a large amount, a regenerator is disposed near the glass melting furnace 10.

On the other hand, when pure oxygen gas is used as a oxidizing gas, the oxidizing gas does not contain $N_2$ gas. Thus, the amount of emission of the combustion gas is small, and no regenerator becomes necessary, and thus the flexibility in the design of the glass melting furnace 10 becomes high. In addition, $N_2$ gas, which does not contribute to combustion, does not need to be heated unnecessarily, and the glass can be efficiently heated with heat of combustion. Furthermore, the generation of $NO_X$ gas can be suppressed.

However, when pure oxygen gas is used as a oxidizing gas, compared to a case in which air is used, the concentration of $H_2O$ gas in the furnace atmosphere becomes high. Also in a case in which oxygen-enriched air is used instead of pure oxygen gas as a oxidizing gas, compared to a case in which air is used, the concentration of $H_2O$ gas becomes high. The oxygen-enriched air is a mixed gas of pure oxygen gas and air and is a gas having a higher concentration of oxygen gas than the air.

The apparatus 1 for producing glass according to this embodiment includes a gas transforming unit 30 that transforms $H_2$ gas for reducing the concentration of $H_2O$ gas in the furnace atmosphere. One or more (one in FIG. 1) gas transforming units 30 are disposed. The gas transforming unit 30 produces at least CO gas and $H_2O$ gas from $CO_2$ gas and $H_2$ gas through a reverse shift reaction (see Equation (1) and Equation (2) represented below). $CO_2$ gas and $H_2$ gas are reactants and CO gas and $H_2O$ gas are products. The products may further contain at least one of $H_2$ gas and $CO_2$ gas.

[Chem. 1] $\quad$ $xCO_2 + H_2 \rightarrow x(1\text{-}y)CO_2 + xyCO + (1\text{-}xy)H_2 + xyH_2O$

$$(0 < x \leq 1,\ 0 < y \leq 1) \bullet\bullet\bullet (1)$$

[Chem. 2] $\quad$ $xCO_2 + H_2 \rightarrow (x\text{-}y)CO_2 + yCO + (1\text{-}y)H_2 + yH_2O$

$$(0 < x \leq 1,\ 0 < y \leq 1) \bullet\bullet\bullet (2)$$

In Equation (1) and Equation (2), x represents the molar ratio of $CO_2$ gas to $H_2$ gas supplied to the gas transforming unit 30. The molar ratio x is greater than 0.00. In general, the molar ratio is equal to a volume ratio. y represents the reaction rate of a reverse shift reaction. The reaction rate y being 0.00 means that the reverse shift reaction has not progressed at all. The reaction rate y being 1.00 means that the reverse shift reaction has been completed. The reaction rate y represents a ratio of the production amount of CO gas (in moles) to a maximum production amount of CO gas (in moles). The maximum production amount of CO gas is equal to a minimum value of the initial amount of $CO_2$ gas and the initial amount of $H_2$ gas.

The gas transforming unit 30 may cause a reverse shift reaction to progress and may cause a reaction different from the reverse shift reaction to simultaneously progress. Thus, $CO_2$ gas and $H_2$ gas may be supplied to the gas transforming unit 30 as reactants, and any other gas may be further supplied thereto.

The reverse shift reaction is represented using the following Equation (3).
[Chem. 3]

$$CO_2 + H_2 + 41.2\ [kJ/mol] \rightarrow CO + H_2O \bullet\bullet\bullet \quad\quad (3)$$

From Equation (3), it can be understood that the reverse shift reaction is an endothermic reaction. In an endothermic reaction, the higher the temperature of the reaction field, the more the reaction progresses. A product of the endothermic reaction (CO gas) potentially contains a greater heat content than the reactant of the endothermic reaction ($H_2$ gas). Thus, when the product of the endothermic reaction (CO gas) is burned, a greater heat of combustion than that of a heat of combustion of the reactant of the endothermic reaction ($H_2$ gas) can be acquired.

The gas transforming unit 30 supplies products such as CO gas and the like to the burner 20. The supplied gases include, for example, CO gas and $H_2O$ gas (see Equation (1) and Equation (2)). The supplied gases may additionally contain at least one of $H_2$ gas and $CO_2$ gas.

The burner 20 forms a flame inside the glass melting furnace 10 by burning a flammable gas including the CO gas produced by the gas transforming unit 30 and a oxidizing gas. By burning CO gas, the heat of combustion per mole can be improved compared with the heat of combustion of $H_2$ gas.

The combustion reaction of CO gas is represented using the following Equation (4), and the combustion reaction of $H_2$ gas is represented using the following Equation (5). Here, the heat of combustion of $H_2$ gas is expressed using a lower heating value.
[Chem. 4]

$$CO + (1/2)O_2 \rightarrow CO_2 + 282.2\ [kJ/mol] \bullet\bullet\bullet \quad\quad (4)$$

[Chem. 5]

$$H_2 + (1/2)O_2 \rightarrow H_2O + 241.9\ [kJ/mol] \bullet\bullet\bullet \quad\quad (5)$$

From Equation (4) and Equation (5), it can be understood that, by burning CO gas, the heat of combustion per mole can be improved compared with in a case in which $H_2$ gas is burned.

A combustion reaction of a flammable gas and a oxidizing gas that is performed using the burner 20 is represented, for example, using the following Equation (6) and the following Equation (7).

[Chem. 6]

$$x(1-y)CO_2 + xyCO + (1-xy)H_2 + xyH_2O + (1/2)O_2 \rightarrow xCO_2 + H_2O \ (0 < x \le 1, 0 < y \le 1) \cdots \qquad (6)$$

[Chem. 7]

$$(x-y)CO_2 + yCO + (1-y)H_2 + yH_2O + (1/2)O_2 \rightarrow xCO_2 + H_2O \ (0 < x \le 1, 0 < y \le 1) \cdots \qquad (7)$$

Equation (6) represents a combustion reaction of the product acquired in Equation (1). On the other hand, Equation (7) represents a combustion reaction of the product acquired in Equation (2). In Equation (6) and Equation (7), x represents the molar ratio of $CO_2$ gas to $H_2$ gas supplied to the gas transforming unit 30. The molar ratio x is greater than 0.00.

The combustion reaction of a flammable gas and a oxidizing gas may include at least the combustion reactions represented in Equation (6) and Equation (7) and may further include yet another combustion reaction.

The burner 20, as described above, burns a flammable gas including CO gas produced by the gas transforming unit 30 and a oxidizing gas. Thus, the combustion gases include not only $H_2O$ gas but also $CO_2$ gas. This is apparent also from Equation (6) and Equation (7). The $CO_2$ gas can dilute the $H_2O$ gas and reduce the concentration of $H_2O$ gas in the furnace atmosphere.

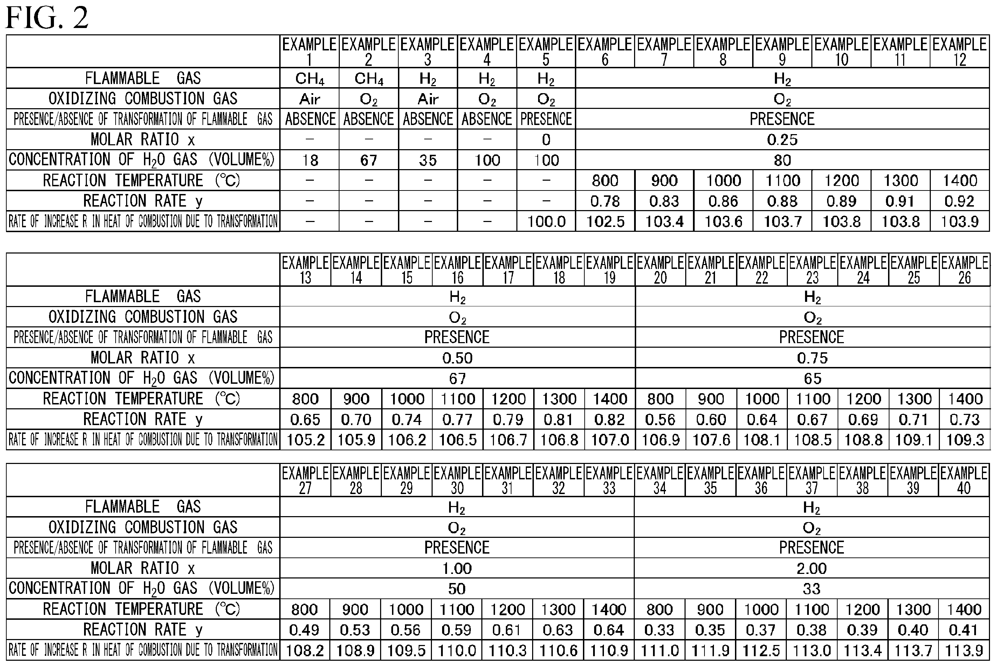

FIG. 2 illustrates Example 1 to Example 40 of combinations of a flammable gas, a oxidizing gas, presence/absence of transformation of the flammable gas, a molar ratio x, concentration of $H_2O$ gas, a reaction temperature, a reaction rate y, and the rate of increase R in heat of combustion due to transformation. In FIG. 2, "the concentration of $H_2O$ gas" is the concentration of $H_2O$ gas in the combustion gas. The "reaction temperature" is a reaction temperature in the gas transforming unit 30. The "reaction rate y" is a value acquired when the reverse shift reaction reaches equilibrium and is a value without taking a reaction speed into account. In a case in which the molar ratio x is constant, the reaction rate y changes in accordance with the reaction temperature, and the higher the reaction temperature, the higher the reaction rate y. "The rate of increase R in heat of combustion due to transformation" represents the ratio (%) of the heat of combustion of the flammable gas after transformation to the heat of combustion of the flammable gas before transformation.

In a case in which the molar ratio x is 1.00 or less, the rate of increase R is obtained using the following Equation (8).

[Math. 1]

$$R = (241.9 + 41.2xy)/241.9 \times 100 \cdots (8)$$

Equation (8) represents the ratio of the heat of combustion of a flammable gas after transformation (xy moles of CO gas and (1 - xy) moles of $H_2$ gas) to the heat of combustion of a flammable gas before transformation (1 mole of $H_2$ gas) (see Equation (4), Equation (5), and Equation (6)). As is apparent from Equation (8), in a case in which the molar ratio x is constant, the higher the reaction rate y, the larger the rate of increase R.

In a case in which the molar ratio x is greater than 1.00, the rate of increase R is obtained using the following Equation (9).

[Math. 2]

$$R = (241.9 + 41.2y)/241.9 \times 100 \cdots (9)$$

Equation (9) represents the ratio (%) of the heat of combustion of a flammable gas after transformation (y moles of CO gas and (1 - y) moles of $H_2$ gas) to the heat of combustion of the flammable gas before transformation (1 mole of $H_2$ gas) (see Equation (4), Equation (5), and Equation (7)). As is apparent from Equation (9), regardless of the molar ratio x, the higher the reaction rate y, the larger the rate of increase R.

As illustrated in FIG. 2, when $H_2$ gas is used instead of $CH_4$ gas as the flammable gas, the concentration of $H_2O$ gas in the furnace atmosphere becomes higher in accordance with no production of $CO_2$ gas. This becomes remarkable in a case in which a pure oxygen gas is used as a oxidizing gas. In a case in which the pure oxygen gas is used, the concentration of the $H_2O$ gas in the combustion gas is 100 volume%.

The glass raw material may emit a gas when it is melted. Thus, the concentration of the $H_2O$ gas in the furnace atmosphere is actually less than 100 volume%. Although the concentration of $H_2O$ gas in the furnace atmosphere depends also on the type of glass raw material, it is determined mainly in accordance with types of flammable gas and oxidizing gas.

Therefore, in this embodiment, the concentration of the $H_2O$ gas in the combustion gas is employed as a parameter to be managed.

The concentration of the $H_2O$ gas in the combustion gas is preferably less than 67 volume%. Conventionally, molten glass has been produced by burning $CH_4$ gas and $O_2$ gas (a pure oxygen gas), and, it has been confirmed that there are no problems regarding the quality of a glass product and corrosion of a furnace material when the concentration of $H_2O$ gas in the combustion gas is 67 volume% or less.

It is preferable that the molar ratio x should be 0.50 or more such that the concentration of $H_2O$ gas in the combustion gas is 67 volume% or less (see FIG. 2). It is more preferable that the concentration of the $H_2O$ gas in the combustion gas should be 65 volume% or less. It is more preferable that the molar ratio x should be 0.55 or more such that the concentration of $H_2O$ gas in the combustion gas is 65 volume% or less.

Although a lower limit of the concentration of the $H_2O$ gas in the combustion gas is not particularly limited, from the point of view of feasibility, it is preferable that the lower limit is 20 volume% or more. It is preferable that the molar ratio x should be 4.00 or less such that the concentration of the $H_2O$ gas in the combustion gas becomes 20 volume% or more.

The molar ratio x should be 1.00 or less. If the molar ratio x is 1.00 or less, the combustion reaction is represented by Equation (6). On the other hand, if the molar ratio x exceeds 1.00, the combustion reaction is represented by Equation (7). As is apparent from Equation (7), if the molar ratio x exceeds 1.00, there are (x - y) moles of the $CO_2$ gas not contributing to combustion. This $CO_2$ gas not only does not produce heat of combustion but also wastes heat of combustion. If the molar ratio x is less than 1.00, the amount of the $CO_2$ gas that wastes heat of combustion can be reduced, and glass can be heated efficiently with the heat of combustion.

In supplying $CO_2$ gas to the gas transforming unit 30, although a dedicated supply source such as a gas cylinder that is not illustrated in the drawing may be used, in this embodiment, a circulation line 50 is used. The circulation line 50 supplies at least a part of the $CO_2$ gas contained in the combustion gas from the glass melting furnace 10 to the gas transforming unit 30. At least a part of the $CO_2$ gas emitted from the glass melting furnace 10 can be used as a reactant of a reverse shift reaction. The $CO_2$ gas can be circulated, and the amount of emission of the $CO_2$ gas can be reduced.

It is preferable that a dehydration unit 51 is disposed in the middle of the circulation line 50. The dehydration unit 51 removes $H_2O$ gas from the combustion gas, thereby separating the $H_2O$ gas and the $CO_2$ gas from each other. At least a part of the separated $CO_2$ gas can be used as a reactant in a reverse shift reaction. The supply of the $H_2O$ gas to the gas transforming unit 30 can be limited, and the concentration of the $H_2O$ gas in the furnace atmosphere of the glass melting furnace 10 can be reduced. Although the dehydration unit 51 may be configured to remove at least a part of the $H_2O$ gas, in this embodiment, it substantially removes all of the $H_2O$ gas.

It is preferable that the apparatus 1 for producing glass should recover heat from the combustion gas burned by the burner 20 and cause the reverse shift reaction to progress using the recovered heat. By recovering heat from the burned combustion gas, the waste of energy can be reduced. As a heat recovering means, a recuperator or a regenerator to be described below is used. Hereinafter, the heat recovering means and the like will be described.

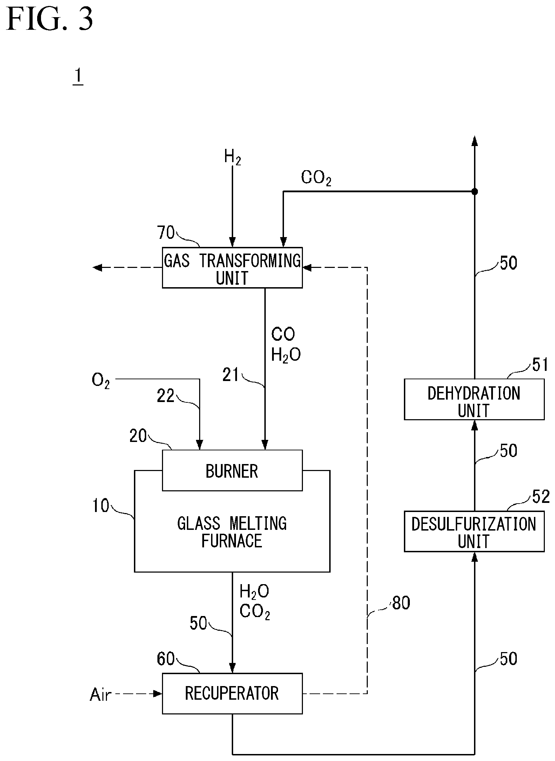

An apparatus 1 for producing glass according to a first example that includes a recuperator 60 and a reactor 70 will be described with reference to FIG. 3. The apparatus 1 for producing glass includes a glass melting furnace 10, a burner 20, a recuperator 60, and a reactor 70. The reactor 70 is an example of the gas transforming unit 30 and, for example, causes a reverse shift reaction to progress. Hereinafter, differences from the apparatus 1 for producing glass illustrated in FIG. 1 will be mainly described.

The recuperator 60 heats a heat transfer medium through heat exchange with the combustion gas emitted from the glass melting furnace 10. Although the heat transfer medium may be either a gas or a liquid, the temperature of the combustion gas is high, and thus it is preferable that the heat transfer medium should be a gas from the point of view of prevention of boiling. The heat transfer medium is preferably the air. The recuperator 60 transfers heat between the combustion gas and the heat transfer medium (for example, air) without mixing them. Although the recuperator 60 is disposed outside the glass melting furnace 10 in FIG. 3, it may be disposed inside the glass melting furnace 10. One or more (one in FIG. 3) recuperators 60 are disposed. The recuperator 60 is thermally connected to the reactor 70 through a heat transport line 80. The heat transport line 80 transports the heat transfer medium from the recuperator 60 to reactor 70.

The reactor 70 causes a reverse shift reaction to progress by heating $CO_2$ gas and $H_2$ gas through heat exchange with the heat transfer medium heated by the recuperator 60 and produces at least CO gas from $CO_2$ gas and $H_2$ gas. The $CO_2$ gas and the $H_2$ gas are reactants, and the CO gas and the $H_2O$ gas are products (see Equation (3)). The products may further contain $H_2$ gas or $CO_2$ gas (see Equation (1) and Equation (2)). The reactor 70 does not mix the reactants and the products of the reverse shift reaction and the heat transfer medium (for example, the air) and transfers heat between them.

Since the reverse shift reaction is an endothermic reaction, heat can be efficiently recovered from the heat transfer medium, and the heat recovered from the combustion gas can be efficiently used. In addition, the product of the endothermic reaction (CO gas) potentially contains a larger heat content than the reactant of the endothermic reaction ($H_2$ gas). Hence, combustion of CO gas provides more heat of combustion per mole than combustion of $H_2$ gas (see equations (4) and (5)). As a result, the specific energy consumption of molten glass can be reduced. The specific energy consumption is an amount of the consumption of energy input from outside the system for producing one ton of molten glass.

A reaction occurring in reactor 70 may be an endothermic reaction as a whole and may include a reaction other than the reverse shift reaction. Thus, in the reactor 70, reactants and products are not particularly limited. The product (that is, the flammable gas) produced in the reactor 70 is supplied to the burner 20 through a first supply line 21. On the other hand, the oxidizing gas is supplied to the burner 20 through a second supply line 22.

It is preferable that the apparatus 1 for producing glass should include a circulation line 50. The circulation line 50 supplies at least a part of $CO_2$ gas contained in the combustion gas burned by the burner 20 from the glass melting furnace 10 to the reactor 70. At least a part of the $CO_2$ gas emitted from the glass melting furnace 10 can be used as a reactant of the reverse shift reaction. The $CO_2$ gas can be circulated, and the amount of emission of the $CO_2$ gas can be reduced.

Apparatus 1 for producing glass preferably comprises a dehydration unit 51 in the middle of circulation line 50. The dehydration unit 51 separates the $H_2O$ gas from the $CO_2$ gas by removing the $H_2O$ gas from the combustion gas. The circulation of $H_2O$ gas can be restricted while permitting the circulation of $CO_2$ gas. $H_2O$ gas not only does not generate heat of combustion but also wastes heat of combustion. If the circulation of $H_2O$ gas can be restricted, the non-flammable $H_2O$ gas can be avoided, and the heat of combustion can be used to heat glass efficiently. If the circulation of $H_2O$ gas can be restricted, the concentration of $H_2O$ gas in the furnace atmosphere can be reduced. The dehydration unit 51 may remove at least a portion of the $H_2O$ gas, but in the present embodiment substantially all of the $H_2O$ gas is removed.

It is more preferable that a desulfurization unit 52 should be disposed in the middle of the circulation line 50. The desulfurization unit 52 removes a sulfur-containing gas from the combustion gas. Sulfur contained in the sulfur-containing gas is originated from a glass raw material and, for example, is originated from a fining agent. By disposing the desulfurization unit 52 in the middle of the circulation line 50, the supply of the sulfur-containing gas to the reactor 70 can be restricted. In accordance with this, the reactor 70 can be maintained to be in a clean state.

Unlike the regenerator to be described below, the recuperator 60 and the reactor 70 recover heat of the combustion gas using a heat transfer medium, and thus a combustion gas can be restricted from directly flowing to the reactor 70, and the reactor 70 can be maintained to be in a clean state. Thus, in a case in which the reactor 70 has a metal catalyst, the degradation of that metal catalyst can be suppressed.

The reactor 70 may have a metal catalyst. The metal catalyst promotes a reverse shift reaction. The metal catalyst can cause the reaction to reach equilibrium in a short time by increasing the reaction speed of the reverse shift reaction. The metal catalyst can also reduce the volume of reactor 70 by increasing the reaction speed of the reverse shift reaction. Copper (Cu), nickel (Ni), or the like is used as the metal catalyst. The metal catalyst may be omitted if the reaction speed is sufficiently fast.

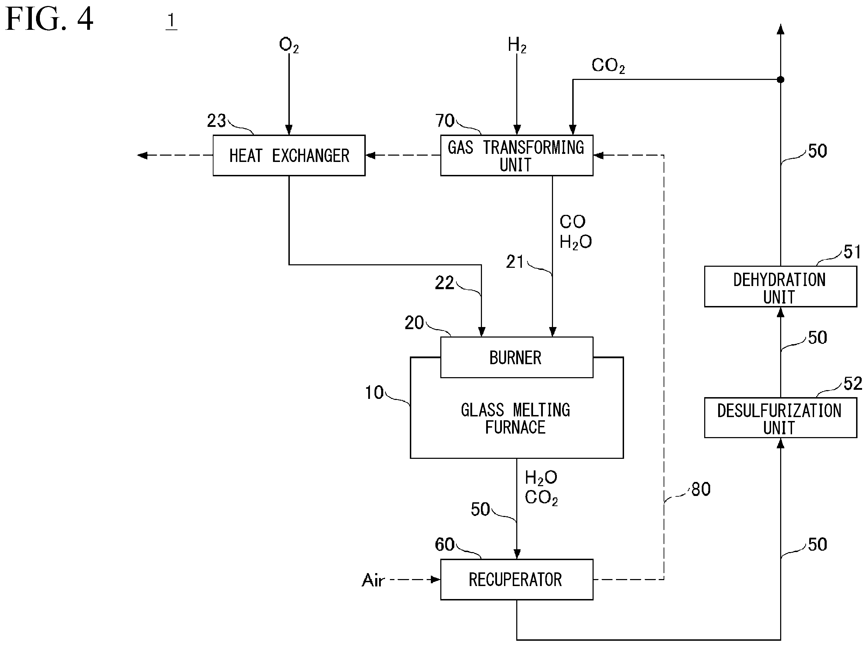

An apparatus 1 for producing glass according to a second example that includes a recuperator 60 and a reactor 70 will be described with reference to FIG. 4.
Hereinafter, differences from the apparatus 1 for producing glass illustrated in FIG. 3 will be mainly described. As illustrated in FIG. 4, it is preferable that the apparatus 1 for producing glass should include a heat exchanger 23.

The heat exchanger 23 is disposed in the middle of the second supply line 22 and preheats a oxidizing gas (for example, a pure oxygen gas) through heat exchange with a heat transfer medium heated by the recuperator 60. The heat recovered from a combustion gas can be effectively used, and thus the specific energy consumption of molten glass can be reduced. The heat exchanger 23 transfers heat between the oxidizing gas and the heat transfer medium (for example, the air) without mixing them.

The heat transport line 80 transports the heat transfer medium from the recuperator 60 to the heat exchanger 23. Preferably, the heat transport line 80 transports the heat transfer medium from the recuperator 60 to the reactor 70 and then transports the heat transfer medium from the reactor 70 to the heat exchanger 23. Since the reactants of the reverse shift reaction can be heated before heating the oxidizing gas, heat that is necessary for causing the reverse shift reaction to progress can be easily secured.

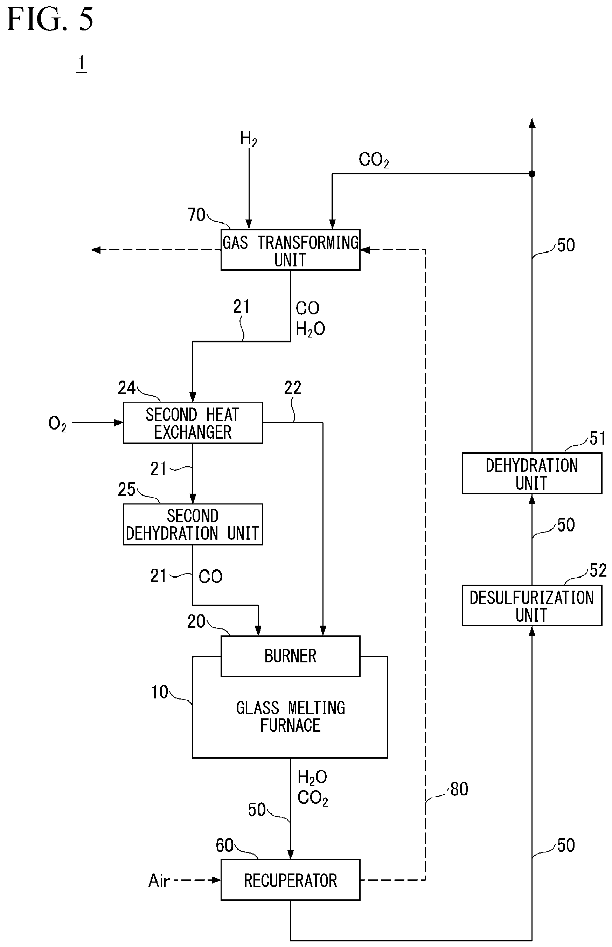

An apparatus 1 for producing glass according to a third example that includes a recuperator 60 and a reactor 70 will be described with reference to FIG. 5. Hereinafter, differences from the apparatus 1 for producing glass illustrated in FIG. 3 will be mainly described. As illustrated in FIG. 5, it is preferable that the apparatus 1 for producing glass should include a second heat exchanger 24 and a second dehydration unit 25.

The second heat exchanger 24 transfers heat from a product of the reactor 70 to the oxidizing gas at a first place of the first supply line 21 that overlaps the second supply line 22. The second heat exchanger 24 transfers heat between the product of the reactor 70 and the oxidizing gas without mixing them. The second dehydration unit 25 removes $H_2O$ gas from the product of the reactor 70 at a second place disposed on the downstream of the first place of the first supply line 21. Although the second dehydration unit 25 may remove at least a part of the $H_2O$ gas, in this example, it substantially removes the whole $H_2O$ gas.

The second dehydration unit 25 removes $H_2O$ gas from the product of the reactor 70, for example, by cooling the product of the reactor 70. The $H_2O$ gas not only does not produce heat of combustion but wastes the heat of combustion. The second dehydration unit 25 restricts the supply of the $H_2O$ gas to the burner 20. The $H_2O$ gas not contributing to combustion does not need to be heated unnecessarily, and glass can be efficiently heated with the heat of combustion. In addition, the concentration of the $H_2O$ gas in the furnace atmosphere can be reduced.

Before the second dehydration unit 25 cools the product of the reactor 70, the second heat exchanger 24 transfers heat from the product of the reactor 70 to the oxidizing gas. Therefore, the heat recovered from the combustion gas can be efficiently used, and the specific energy consumption of molten glass can be reduced.

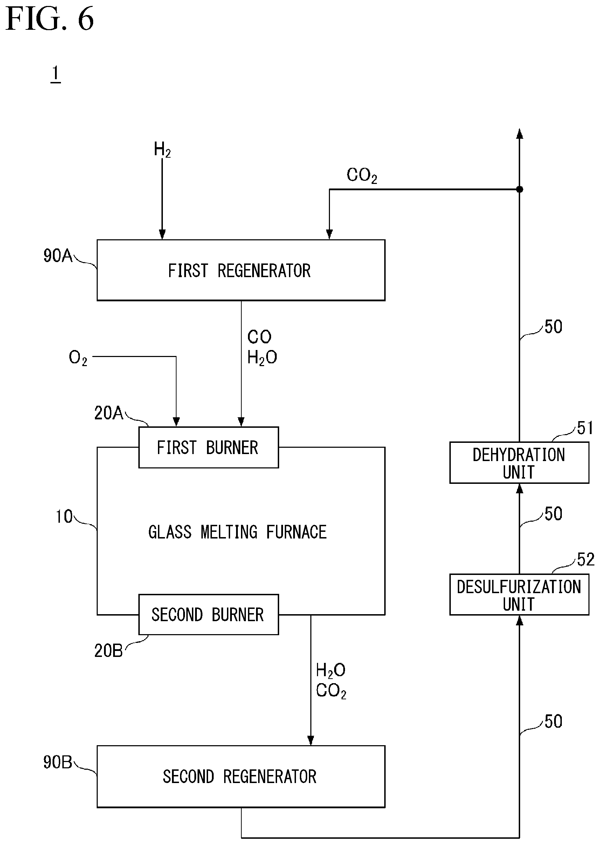

An apparatus 1 for producing glass according to the first example that includes a first regenerator 90A and a second regenerator 90B will be described with reference to FIG. 6. The apparatus 1 for producing glass includes a glass melting furnace 10, a first burner 20A, a second burner 20B, a first regenerator 90A, and a second regenerator 90B. The first regenerator 90A and the second regenerator 90B are examples of the gas transforming unit 30 and, for example, cause a reverse shift reaction to progress. Hereinafter, differences from the apparatus 1 for producing glass illustrated in FIG. 1 will be mainly described.

The first regenerator 90A and the second regenerator 90B are used in combination with the first burner 20A and the second burner 20B. Although one first regenerator 90A is illustrated in FIG. 6, a plurality of first regenerators 90A may be provided. Similarly, the number of second regenerators 90B, the number of first burners 20A, and the number of second burners 20B may be one or more.

The apparatus 1 for producing glass alternately repeats formation of a flame inside the glass melting furnace 10 using the first burner 20A and formation of a flame inside the glass melting furnace 10 using the second burner 20B. FIG. 6 is a diagram illustrating a state in which the first burner 20A forms a flame inside the glass melting furnace 10.

While the second burner 20B forms a flame inside the glass melting furnace 10, the first regenerator 90A recovers heat from the combustion gas emitted from the glass melting furnace 10. While the first burner 20A forms a flame inside the glass melting furnace 10, the first regenerator 90A emits heat that has been recovered in advance and causes a reverse shift reaction producing at least CO gas from $CO_2$ gas and $H_2$ gas to progress. The first burner 20A forms a flame inside the glass melting furnace 10 by burning a flammable gas including the CO gas produced by the first regenerator 90A and a oxidizing gas.

Similarly, while the first burner 20A forms a flame inside the glass melting furnace 10, the second regenerator 90B recovers heat from the combustion gas emitted from the glass melting furnace 10. While the second burner 20B forms a flame inside the glass melting furnace 10, the second regenerator 90B emits heat that has been recovered in advance and causes a reverse shift reaction producing at least CO gas from $CO_2$ gas and $H_2$ gas to progress. The second burner 20B forms a flame inside the glass melting furnace 10 by burning a flammable gas including the CO gas produced by the second regenerator 90B and a oxidizing gas.

The first regenerator 90A and the second regenerator 90B are different from the recuperator 60 and the reactor 70 in that the combustion gas flows directly into them. The heat of the combustion gas is accumulated in furnace beds and the like of the first regenerator 90A and the second regenerator 90B.

The first regenerator 90A and the second regenerator 90B cause a reverse shift reaction to progress by heating $CO_2$ gas and $H_2$ gas to produce at least CO gas from the $CO_2$ gas and the $H_2$ gas. The $CO_2$ gas and the $H_2$ gas are reactants, and the CO gas and the $H_2O$ gas are products (see Equation (3)). The products may further contain $H_2$ gas or $CO_2$ gas (see Equations (1) and (2)).

Since the reverse shift reaction is an endothermic reaction, heat can be efficiently recovered from the combustion gas, and the heat of the combustion gas can be efficiently used. In addition, the product of the endothermic reaction (the CO gas) potentially contains a larger heat content than the reactant of the endothermic reaction (the $H_2$ gas). Thus, by burning CO gas, heat of combustion per mole can be improved more than that of combustion of $H_2$ gas (see Equations (4) and (5)). As a result, the specific energy consumption of molten glass can be reduced.

Reactions occurring in the first regenerator 90A and the second regenerator 90B may be an endothermic reaction as a whole and may include a reaction other than the reverse shift reaction. Thus, the reactants and the products in the first regenerator 90A and the second regenerator 90B are not particularly limited.

It is preferable that the apparatus 1 for producing glass should include a circulation line 50. While the first burner 20A forms a flame inside the glass melting furnace 10, the circulation line 50 supplies at least a part of the $CO_2$ gas contained in the combustion gas emitted from the glass melting furnace 10 from the second regenerator 90B to the first regenerator 90A. At least a part of the $CO_2$ gas emitted from the glass melting furnace 10 can be used as a reactant of the reverse shift reaction. The $CO_2$ gas can be circulated, and thus the amount of emission of the $CO_2$ gas can be reduced.

While the second burner 20B forms a flame inside the glass melting furnace 10, the circulation line 50 may supply at least a part of the $CO_2$ gas contained in the combustion gas emitted from the glass melting furnace 10 from the first regenerator 90A to the second regenerator 90B. Although the circulation line 50 circulating the $CO_2$ gas while the first burner 20A forms a flame inside the glass melting furnace 10 and the circulation line 50 circulating the $CO_2$ gas while the second burner 20B forms a flame inside the glass melting furnace 10 are the same in this example, they may be different from each other and may be separately disposed.

Apparatus 1 for producing glass preferably comprises a dehydration unit 51 in the middle of circulation line 50. The dehydration unit 51 separates the $H_2O$ gas from the $CO_2$ gas by removing the $H_2O$ gas from the combustion gas. The circulation of $H_2O$ gas can be restricted while permitting the circulation of $CO_2$ gas. $H_2O$ gas not only does not generate heat of combustion but also wastes heat of combustion. If the circulation of $H_2O$ gas can be restricted, the non-flammable

$H_2O$ gas can be avoided, and the heat of combustion can be used to heat glass efficiently. If the circulation of $H_2O$ gas can be restricted, the concentration of $H_2O$ gas in the furnace atmosphere can be reduced. The dehydration unit 51 may remove at least a portion of the $H_2O$ gas, but in the present embodiment substantially all of the $H_2O$ gas is removed.

It is more preferable that a desulfurization unit 52 should be disposed in the middle of the circulation line 50. The desulfurization unit 52 removes a sulfur-containing gas from the combustion gas. Sulfur contained in the sulfur-containing gas is originated from a glass raw material and, for example, is originated from a fining agent. By disposing the desulfurization unit 52 in the middle of the circulation line 50, the supply of the sulfur-containing gas to the first regenerator 90A or the second regenerator 90B can be restricted.

In relation with the embodiments and the like described above, the following supplementary notes are disclosed.

[Supplementary Note 1]

An apparatus for producing glass, the apparatus including: a recuperator heating a heat transfer medium through heat exchange with a combustion gas emitted from a glass melting furnace; a reactor causing a reverse shift reaction to progress by heating $CO_2$ gas and $H_2$ gas through heat exchange with the heat transfer medium heated by the recuperator and producing at least CO gas from the $CO_2$ gas and the $H_2$ gas; and a burner forming a flame inside the glass melting furnace by burning a flammable gas containing the CO gas produced by the reactor and a oxidizing gas.

[Supplementary Note 2]

The apparatus for producing glass described in Supplementary Note 1, in which the oxidizing gas is a pure oxygen gas or oxygen-enriched air.

[Supplementary Note 3]

The apparatus for producing glass described in Supplementary Note 1 or 2, further including a circulation line supplying at least a part of the $CO_2$ gas contained in the combustion gas burned by the burner from the glass melting furnace to the reactor.

[Supplementary Note 4]

The apparatus for producing glass described in Supplementary Note 3, further including a dehydration unit, which is disposed in the middle of the circulation line, removing $H_2O$ gas from the combustion gas.

[Supplementary Note 5]

The apparatus for producing glass described in any one of Supplementary Notes 1 to 4, further including a heat exchanger preheating the oxidizing gas through heat exchange with the heat transfer medium heated by the recuperator.

[Supplementary Note 6]

The apparatus for producing glass described in any one of Supplementary Notes 1 to 5, further including: a first supply line supplying a product of the reactor to the burner; a second supply line supplying the oxidizing gas to the burner; a second heat exchanger transferring heat from the product of the reactor to the oxidizing gas at a first place of the first supply line that overlaps the second supply line; and a second dehydration unit removing $H_2O$ gas from the product of the reactor at a second place disposed on the downstream of the first place of the first supply line.

[Supplementary Note 7]

The apparatus for producing glass described in any one of Supplementary Notes 1 to 6, in which the reactor has a metal catalyst promoting the reverse shift reaction.

[Supplementary Note 8]

An apparatus for producing glass that alternately repeats formation of a flame inside a glass melting furnace using a first burner and formation of a flame inside the glass melting furnace using a second burner, the apparatus for producing glass including: a first regenerator causing a reverse shift reaction of producing at least CO gas from $CO_2$ gas and $H_2$ gas to progress by recovering heat from a combustion gas emitted from the glass melting furnace while the second burner forms a flame inside the glass melting furnace and by discharging heat while the first burner forms a flame inside the glass melting furnace; the first burner forming a flame inside the glass melting furnace by burning a flammable gas containing the CO gas produced in the first regenerator and a oxidizing gas; a second regenerator causing a reverse shift reaction of producing at least CO gas from $CO_2$ gas and $H_2$ gas to progress by recovering heat from a combustion gas emitted from the glass melting furnace while the first burner forms a flame inside the glass melting furnace and by discharging heat while the second burner forms a flame inside the glass melting furnace; and the second burner forming a flame inside the glass melting furnace by burning a flammable gas containing the CO gas produced in the second regenerator and a oxidizing gas.

[Supplementary Note 9]

The apparatus for producing glass described in Supplementary Note 8, in which the oxidizing gas is a pure oxygen gas or oxygen-enriched air.

[Supplementary Note 10]

The apparatus for producing glass described in Supplementary Note 8 or 9, further including a circulation line supplying at least a part of the $CO_2$ gas contained in the combustion gas emitted from the glass melting furnace from the second regenerator to the first regenerator while the first burner forms a flame inside the glass melting furnace.

[Supplementary Note 11]

The apparatus for producing glass described in Supplementary Note 10, further including a dehydration unit, which is disposed in the middle of the circulation line, removing $H_2O$ gas from the combustion gas.

[Supplementary Note 12]

A method for producing glass including producing molten glass using the apparatus for producing glass described in any one of Supplementary Notes 1 to 11.

Although the apparatuses for producing glass and the methods for producing glass according to the present disclosure have been described as above, the present disclosure is not limited to the embodiment and the like described above. Various changes, modifications, substitutions, additions, deletions, and combinations can be made within the scope of the claims. It is apparent that those belong to the technical scope of the present disclosure.

Priority is claimed on Japanese Patent Application No. 2022-188269, filed November 25, 2022, the content of which is incorporated herein by reference.

REFERENCE SIGNS LIST

    1 Apparatus for producing glass
    10 Glass melting furnace
    20 Burner
    30 Gas transforming unit

**Claims**

1.    An apparatus for producing glass, the apparatus comprising:

    a recuperator heating a heat transfer medium through heat exchange with a combustion gas emitted from a glass melting furnace;
    a reactor causing a reverse shift reaction to progress by heating $CO_2$ gas and $H_2$ gas through heat exchange with the heat transfer medium heated by the recuperator and producing at least CO gas from the $CO_2$ gas and the $H_2$ gas; and
    a burner forming a flame inside the glass melting furnace by burning a flammable gas containing the CO gas produced by the reactor and a oxidizing gas.

2. The apparatus for producing glass according to claim 1, wherein the oxidizing gas is pure oxygen gas or oxygen-enriched air.

3. The apparatus for producing glass according to claim 1 or 2, further comprising a circulation line supplying at least a part of the $CO_2$ gas contained in the combustion gas burned by the burner from the glass melting furnace to the reactor.

4. The apparatus for producing glass according to claim 3, further comprising a dehydration unit, which is disposed in the middle of the circulation line, removing $H_2O$ gas from the combustion gas.

5. The apparatus for producing glass according to claim 1 or 2, further comprising a heat exchanger preheating the oxidizing gas through heat exchange with the heat transfer medium heated by the recuperator.

6. The apparatus for producing glass according to claim 1 or 2, further comprising:

   a first supply line supplying a product of the reactor to the burner;
   a second supply line supplying the oxidizing gas to the burner;
   a second heat exchanger transferring heat from the product of the reactor to the oxidizing gas at a first place on the first supply line that overlaps the second supply line; and
   a second dehydration unit removing $H_2O$ gas from the product of the reactor at a second place disposed downstream of the first place on the first supply line.

7. The apparatus for producing glass according to claim 1 or 2, wherein the reactor has a metal catalyst promoting the reverse shift reaction.

8. An apparatus for producing glass that alternately repeats formation of a flame inside a glass melting furnace using a first burner and formation of a flame inside the glass melting furnace using a second burner, the apparatus for producing glass comprising:

   a first regenerator causing a reverse shift reaction of producing at least CO gas from $CO_2$ gas and $H_2$ gas to progress by recovering heat from a combustion gas emitted from the glass melting furnace while the second burner forms a flame inside the glass melting furnace and by discharging heat while the first burner forms a flame inside the glass melting furnace;
   the first burner forming a flame inside the glass melting furnace by burning a flammable gas containing the CO gas produced in the first regenerator and a oxidizing gas;
   a second regenerator causing a reverse shift reaction of producing at least CO gas from $CO_2$ gas and $H_2$ gas to progress by recovering heat from a combustion gas emitted from the glass melting furnace while the first burner forms a flame inside the glass melting furnace and by discharging heat while the second burner forms a flame inside the glass melting furnace; and
   the second burner forming a flame inside the glass melting furnace by burning a flammable gas containing the CO gas produced in the second regenerator and a oxidizing gas.

9. The apparatus for producing glass according to claim 8, wherein the oxidizing gas is pure oxygen gas or oxygen-enriched air.

10. The apparatus for producing glass according to claim 8 or 9, further comprising a circulation line supplying at least a part of the $CO_2$ gas contained in the combustion gas emitted from the glass melting furnace from the second regenerator to the first regenerator while the first burner forms a flame inside the glass melting furnace.

11. The apparatus for producing glass according to claim 10, further comprising a dehydration unit, which is disposed in the middle of the circulation line, removing $H_2O$ gas from the combustion gas.

12. A method for producing glass comprising producing molten glass using the apparatus for producing glass according to any one of claims 1, 2, 8, and 9.

# FIG. 1

<u>1</u>

## FIG. 2

| | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 | EXAMPLE 12 |
|---|---|---|---|---|---|---|---|---|---|---|---|---|
| FLAMMABLE GAS | $CH_4$ | $CH_4$ | $H_2$ | $H_2$ | $H_2$ | $H_2$ | | | | | | |
| OXIDIZING COMBUSTION GAS | Air | $O_2$ | Air | $O_2$ | $O_2$ | $O_2$ | | | | | | |
| PRESENCE/ABSENCE OF TRANSFORMATION OF FLAMMABLE GAS | ABSENCE | ABSENCE | ABSENCE | ABSENCE | PRESENCE | PRESENCE | | | | | | |
| MOLAR RATIO x | – | – | – | – | 0 | 0.25 | | | | | | |
| CONCENTRATION OF $H_2O$ GAS (VOLUME%) | 18 | 67 | 35 | 100 | 100 | 80 | | | | | | |
| REACTION TEMPERATURE (°C) | – | – | – | – | – | 800 | 900 | 1000 | 1100 | 1200 | 1300 | 1400 |
| REACTION RATE y | – | – | – | – | – | 0.78 | 0.83 | 0.86 | 0.88 | 0.89 | 0.91 | 0.92 |
| RATE OF INCREASE R IN HEAT OF COMBUSTION DUE TO TRANSFORMATION | – | – | – | – | 100.0 | 102.5 | 103.4 | 103.6 | 103.7 | 103.8 | 103.8 | 103.9 |

| | EXAMPLE 13 | EXAMPLE 14 | EXAMPLE 15 | EXAMPLE 16 | EXAMPLE 17 | EXAMPLE 18 | EXAMPLE 19 | EXAMPLE 20 | EXAMPLE 21 | EXAMPLE 22 | EXAMPLE 23 | EXAMPLE 24 | EXAMPLE 25 | EXAMPLE 26 |
|---|---|---|---|---|---|---|---|---|---|---|---|---|---|---|
| FLAMMABLE GAS | $H_2$ | | | | | | | $H_2$ | | | | | | |
| OXIDIZING COMBUSTION GAS | $O_2$ | | | | | | | $O_2$ | | | | | | |
| PRESENCE/ABSENCE OF TRANSFORMATION OF FLAMMABLE GAS | PRESENCE | | | | | | | PRESENCE | | | | | | |
| MOLAR RATIO x | 0.50 | | | | | | | 0.75 | | | | | | |
| CONCENTRATION OF $H_2O$ GAS (VOLUME%) | 67 | | | | | | | 65 | | | | | | |
| REACTION TEMPERATURE (°C) | 800 | 900 | 1000 | 1100 | 1200 | 1300 | 1400 | 800 | 900 | 1000 | 1100 | 1200 | 1300 | 1400 |
| REACTION RATE y | 0.65 | 0.70 | 0.74 | 0.77 | 0.79 | 0.81 | 0.82 | 0.56 | 0.60 | 0.64 | 0.67 | 0.69 | 0.71 | 0.73 |
| RATE OF INCREASE R IN HEAT OF COMBUSTION DUE TO TRANSFORMATION | 105.2 | 105.9 | 106.2 | 106.5 | 106.7 | 106.8 | 107.0 | 106.9 | 107.6 | 108.1 | 108.5 | 108.8 | 109.1 | 109.3 |

| | EXAMPLE 27 | EXAMPLE 28 | EXAMPLE 29 | EXAMPLE 30 | EXAMPLE 31 | EXAMPLE 32 | EXAMPLE 33 | EXAMPLE 34 | EXAMPLE 35 | EXAMPLE 36 | EXAMPLE 37 | EXAMPLE 38 | EXAMPLE 39 | EXAMPLE 40 |
|---|---|---|---|---|---|---|---|---|---|---|---|---|---|---|
| FLAMMABLE GAS | $H_2$ | | | | | | | $H_2$ | | | | | | |
| OXIDIZING COMBUSTION GAS | $O_2$ | | | | | | | $O_2$ | | | | | | |
| PRESENCE/ABSENCE OF TRANSFORMATION OF FLAMMABLE GAS | PRESENCE | | | | | | | PRESENCE | | | | | | |
| MOLAR RATIO x | 1.00 | | | | | | | 2.00 | | | | | | |
| CONCENTRATION OF $H_2O$ GAS (VOLUME%) | 50 | | | | | | | 33 | | | | | | |
| REACTION TEMPERATURE (°C) | 800 | 900 | 1000 | 1100 | 1200 | 1300 | 1400 | 800 | 900 | 1000 | 1100 | 1200 | 1300 | 1400 |
| REACTION RATE y | 0.49 | 0.53 | 0.56 | 0.59 | 0.61 | 0.63 | 0.64 | 0.33 | 0.35 | 0.37 | 0.38 | 0.39 | 0.40 | 0.41 |
| RATE OF INCREASE R IN HEAT OF COMBUSTION DUE TO TRANSFORMATION | 108.2 | 108.9 | 109.5 | 110.0 | 110.3 | 110.6 | 110.9 | 111.0 | 111.9 | 112.5 | 113.0 | 113.4 | 113.7 | 113.9 |

EP 4 624 430 A1

# FIG. 3

**FIG. 4**

# FIG. 5

# FIG. 6

## INTERNATIONAL SEARCH REPORT

| International application No. |
|---|
| **PCT/JP2023/040614** |

| A. CLASSIFICATION OF SUBJECT MATTER |
|---|
| *C03B 5/237*(2006.01)i |
| FI: C03B5/237 |

According to International Patent Classification (IPC) or to both national classification and IPC

| B. FIELDS SEARCHED |
|---|
| Minimum documentation searched (classification system followed by classification symbols) |
| C03B5/00; F23C; F23D; F23J; F23K; F23L; F23N; F27B; F27D; F28B; F28C; F28D; F28F |

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | WO 2022/200127 A1 (L'AIR LIQUIDE, SOCIETE ANONYME POUR L'ETUDE ET L'EXPLOITATION DES PROCEDES GEORGES CLAUDE) 29 September 2022 (2022-09-29) | 1-5, 7, 12 |
| | paragraphs [0022], [0028]-[0043], [0094]-[0114], fig. 1 | |
| A | paragraphs [0022], [0028]-[0043], [0094]-[0114], fig. 1 | 6, 8-11 |
| A | CN 113429114 A (SHANGHAI YUANHAN ENERGY TECHNOLOGY CO., LTD.) 24 September 2021 (2021-09-24) | 1-12 |
| | entire text | |
| A | WO 2011/152024 A1 (NIPPON SHEET GLASS COMPANY, LIMITED) 08 December 2011 (2011-12-08) | 1-12 |
| | entire text | |
| A | JP 7-136462 A (KABUSHIKI KAISHA TOSHIBA) 30 May 1995 (1995-05-30) | 1-12 |
| | entire text | |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2023/040614**

### C. DOCUMENTS CONSIDERED TO BE RELEVANT

| Category* | Citation of document, with indication, where appropriate, of the relevant passages | Relevant to claim No. |
|---|---|---|
| A | WO 2020/236348 A1 (PRAXAIR TECHNOLOGY INC.) 26 November 2020 (2020-11-26) entire text | 1-12 |

Form PCT/ISA/210 (second sheet) (July 2022)

**INTERNATIONAL SEARCH REPORT**
Information on patent family members

International application No.

**PCT/JP2023/040614**

| Patent document cited in search report | | | Publication date (day/month/year) | Patent family member(s) | | | Publication date (day/month/year) |
|---|---|---|---|---|---|---|---|
| WO | 2022/200127 | A1 | 29 September 2022 | EP | 4063320 | A1 | |
| CN | 113429114 | A | 24 September 2021 | JP | 2023-538471 | A | |
| | | | | entire text | | | |
| | | | | US | 2023/0035248 | A1 | |
| | | | | entire text | | | |
| | | | | WO | 2023/010885 | A1 | |
| WO | 2011/152024 | A1 | 08 December 2011 | (Family: none) | | | |
| JP | 7-136462 | A | 30 May 1995 | (Family: none) | | | |
| WO | 2020/236348 | A1 | 26 November 2020 | US | 2022/0146202 | A1 | |
| | | | | entire text | | | |
| | | | | EP | 3972939 | A1 | |
| | | | | CN | 113841021 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3705713 B
- JP 6980795 B
- JP 6144622 B
- JP 2022188269 A